# EUROPEAN PATENT APPLICATION

(11) **EP 2 251 785 A1**
(43) Date of publication of application: **17.11.2010**
(21) Application number: 09717806.5
(22) Date of filing: 26.02.2009
(51) Int. Cl.: G06F 9/48, G06F 9/44

(54) **JOB NETWORK AUTOMATIC GENERATION DEVICE, METHOD, AND PROGRAM RECORDING MEDIUM**

(30) Priority: 07.03.2008 JP 2008058805
(71) Applicant: NEC Corporation, Minato-ku Tokyo 108-8001 (JP)
(72) Inventor: TAKAI, Shinji, Tokyo 108-8001 (JP)
(74) Representative: Vossius & Partner
(86) International application number: PCT/JP2009/054117
(87) International publication number: WO 2009/110525

(57) **Abstract**

In conventional arts, migration of jobs that are described in JCL language used in mainframes and the like into various open systems can not be supported.

A job network auto-generation apparatus under the first aspect of the present invention includes a job network generation means that creates, from an inputted JCL file, a flow link describing a job-step control flow in a job and script files describing job-steps related to above-mentioned flow link; and a job network output means that creates a job network definition file from above-mentioned flow link and above-mentioned script files.

## Description

### Technical field

The present invention relates to a job network auto-generation apparatus, a method and a program recording medium.

### Background art

In recent years, in many enterprise systems, system renewals from a mainframe to an open system using a general-purpose OS such as UNIX (registered trademark) servers or Windows (registered trademark) are performed actively. However, in such a system renewal, a migration of job assets used on the mainframe so far becomes a large problem. Although those job assets are generally described by a job control language (JCL: Job Control Language), general-purpose job management software on an open system cannot interpret the language. Therefore, changing over job control information which these JCL descriptions express into a job network flow (flow chart) on general-purpose job management software is performed.

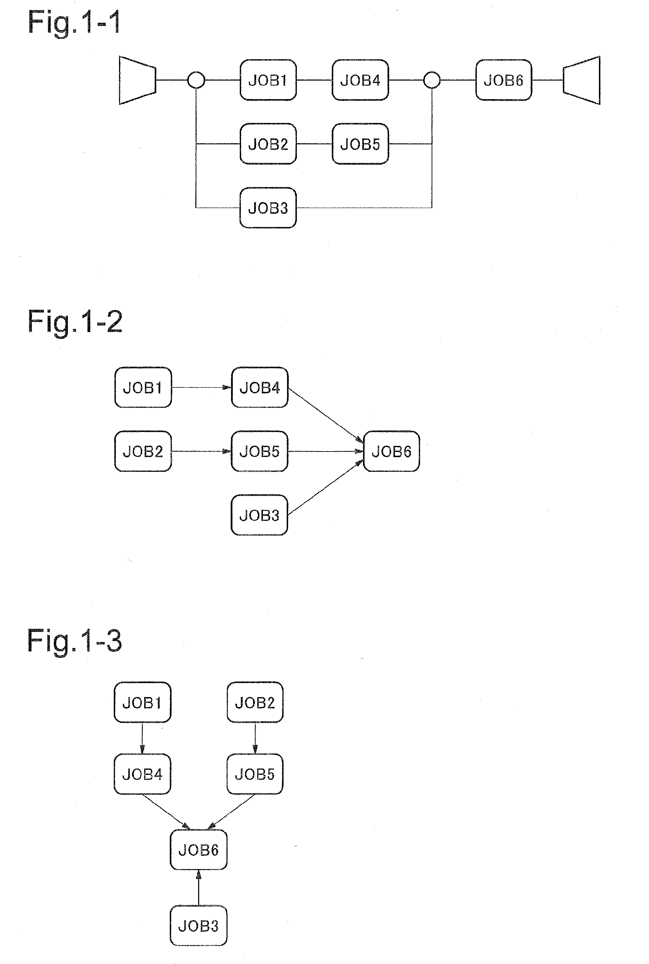

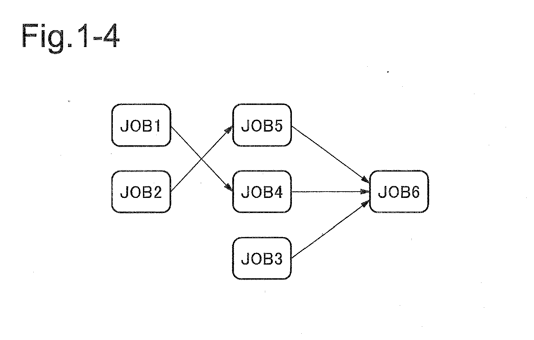

As a form of a job network flow, there exist various forms depending on each type of job management software. Each of Fig. 1-1 to Fig. 1-4 is a job network flow representing an identical order relation. In general job management software, restrictions on a description are not imposed specifically, and users are often allowed to give various descriptions. However, without restrictions, it is not certain whether the job network flow, created for the same order relations, will be like the one in Fig. 1-2 or Fig 1-3, depending on the sensibilities of an operator. If there are job network flows with different and various shapes intermixed for the same order relation, it is a problem from a view point of the efficiency of the test at the time of a job migration and from a view point of the maintainability after a migration.

In order to solve this problem, there is job management software which, as shown in Fig. 1-1, fixes a start point and an end point in advance and restricts the way how to draw a line of a job network flow. Due to this restriction, when an order relation is given, almost unique job network flow is created. This job management software appeal that, whoever creates a job network flow, it will be a flow of a similar form and a simple job network flow with high maintainability is possible to be created.

However, for a migration of a JCL file to such job management software, the JCL description needs to be converted into a job network flow of the simple form. For this conversion, several problems exist.

The first problem is, when conversion work is performed by a system engineer manually, and under a user environment where there exist a large quantity of JCL files, quality deterioration by a human error occurs. Test works which are executed in order to perform the error recovery require enormous cost. Therefore, migration work needs to be automated.

The second problem is as follows. A JCL file includes, among processing descriptions by a command interpreter-like grammar, special control information which describes a control instruction such as parallel execution or waiting. And among control instructions, there exist a control instruction like ¥SUBJOB <-> ¥ENDSUBJOB (parallel execution) which is possible to be written in any location, and a control instruction like ¥WAITSUB by which waiting is definitely performed at the location described. When such a JCL file is converted by a simple automatic conversion tool, a complicated job network flow, with crossing of lines like the one in Fig. 1-4, is quite often generated. In this case, the created job network flow cannot be applied to the above-mentioned job management software any more.

As related technologies, the following inventions are known. Invention of an auto-generation apparatus which generates a job net automatically is disclosed in Japanese Patent Application Laid-Open No. 2001-166928 (refer to Patent Document 1). The auto-generation apparatus creates a database which consolidates the design information from a screen which inputs job net design information (system flow, job flow, identical job, data item information definition, record information definition, file information definition and operation schedule). This auto-generation apparatus generates, according to a registered operation schedule, a job net structure file through job net structure file generation mechanism. This auto-generation apparatus accepts a job network flow as an input and does not accept a JCL file as an input.

Invention of a program conversion apparatus is disclosed in Japanese Patent Application Laid-Open No. 2001-282549 (refer to Patent Document 2). The program conversion apparatus includes a plurality of program counters and a plurality of thread execution devices. A plurality of thread execution devices can execute threads in a control speculative mode and execute threads in a data dependent speculative mode. The control speculative mode is a mode which, according to a plurality of program counters, fetches, interprets and executes instructions of a plurality of threads simultaneously and can cancel afterwards the changes exerted on a register set after the time of thread generation. The data dependent speculative mode is a mode which, after an own thread loaded a value from a memory area, and when a parent thread which generated the own thread stores a value in the identical memory area, cancels processing results at least after the load by the own thread and re-executes those processing.

The program conversion apparatus converts a given source program for multi-thread processors. The multi-thread processor has an instruction set which allows the processor to execute the following processing by a single or a combination of at most several machine instructions. The first processing, executed by a thread on a thread execution device, generates a new thread of a control speculative mode. The second processing when a designated condition is satisfied, ends the own thread and cancels a control speculative mode of a thread generated by the own thread. The third processing cancels a generated thread of a control speculative mode. The fourth processing directs in advance to suspend, when a thread generated by the own thread loads from a designated address of a memory area, the operation temporarily. The fifth processing cancels the above-mentioned temporal load suspend directions for the designated memory address. The sixth processing by a thread, which is being executed on a thread execution device, generates a new thread of a data dependent speculative mode. The seventh processing cancels a data dependent speculative mode of a thread generated by the own thread.

The program conversion apparatus includes a register allocation trial unit, a fork (FORK) location decision unit, an instruction rearrangement unit and a register allocation unit. The register allocation trial unit tries register allocation before parallelization, and predicts the register allocation situation of each variable and intermediate term on an intermediate program. The fork location decision unit determines whether to convert a conditional branch portion of an intermediate program into a parallel code using a thread generation instruction or not, based on a register allocation trial result by the register allocation trial unit. Further the fork location decision unit determines a parallel execution method of a parallel code. The instruction rearrangement unit converts a conditional branch portion of an intermediate program into a parallel code using a thread generation instruction, based on a decision result by the fork location decision unit. And the instruction rearrangement unit, referring to a register allocation trial result, inserts an instruction which guarantees a data dependency relation via a memory between threads before and after the thread generation instruction, and rearranges the instructions before and after the thread generation instruction in order that a thread generation is performed in the early stage. Concerning whether a physical register can be assigned or not, the register allocation unit, for an instruction sequence which is parallelized and rearranged, performs definite register allocation so that it brings about the same allocation result as the register allocation at the time of trial.

This program conversion apparatus is a compiler and the purpose is to avoid data dependency among processes and to make parallel processing efficient.

Invention of a job net diagram auto-generation apparatus which generates a system design plan of a batch system automatically is disclosed in Japanese Patent Application Laid-Open No. 2007-257384 (refer to Patent Document 3). The job net diagram auto-generation apparatus includes a database unit and an information extraction and display unit which searches information from the database unit concerned and displays it. The database unit includes job information, program information, and file information which indicate the ID of a job, a program and a file which composes a batch system, job classification information and file classification information which indicate classification of a job and a file, and relation information which indicates relation among each of above-mentioned information. The information extraction and display unit includes a program which executes a step for extraction and a step for generation. In the step for extraction, the information extraction and display unit designates classification information of a job and extracts job information having the classification concerned from a database unit. In the step for generation, the information extraction and display unit judges a context of job information extracted from relation information and generates a diagram which shows the relation of the job information. In this job net diagram auto-generation apparatus, it is not clear by what kind of policy a job network flow is created based on order relation information. Therefore, when the number of jobs is huge and an order relation is complicated, a possibility that a created job network flow becomes complex, is difficult to understand, and does not bear practical use, is high. Also each time a job network flow is converted, (though the logical meaning that a flow illustrates is same), it is possibly converted into a different flow (as a "picture" visible by a human).

Invention of a program transplantation system is disclosed in Japanese Patent Application Laid-Open No. 1996-147156 (refer to Patent Document 4). The program transplantation system performs program transplantation so that a series of programs which are automatically executed using a job control language on a computer system of a transplantation origin becomes automatically executable on a computer system of a transplantation destination. The program transplantation system includes a job control program input means, an input file existence search means, a logical relation inspection means, an external reference file input means, a log list output means and a modified program output means.

The job control program input means inputs a job control program described by a job control language for a computer system of a transplantation origin. The input file existence search means searches whether a file which corresponds to an input file designated in a file designation statement of a job control program exists in a memory unit of a computer system of a transplantation destination. The logical relation inspection means inspects carefully the logical relation written in a job control program. The external reference file input means inputs a file which corresponds to an external reference file written in a job control program from a memory unit of a computer system of a transplantation destination. The log list output means outputs a log list which indicates the existence of an error when an error has occurred in the program input means, the input file existence search means, the logical relation inspection means or the external reference file input means, and outputs a log list which indicates the nonexistence of an error when an error has not occurred. The modified program output means changes a job control program for use by a computer system of a transplantation destination and outputs it when an error did not occur in the program input means, the input file existence search means, the logical relation inspection means nor the external reference file input means.

This program transplantation system cannot carry out simplification or optimization of a flow shape, neither can improve the legibility and visualization of a job network flow. Further, the program transplantation system is not useful for a reduction of management manpower, operation manpower and maintenance manpower of a job execution environment.
[Patent Document 1] Japanese Patent Application Laid-Open No. 2001-166928
[Patent Document 2] Japanese Patent Application Laid-Open No. 2001-282549
[Patent Document 3] Japanese Patent Application Laid-Open No. 2007-257384
[Patent Document 4] Japanese Patent Application Laid-Open No. 1996-147156

### Disclosure of the invention

### Problem to be solved by the invention

Technologies of the above-mentioned patent documents are not for a migration of jobs described by a JCL language used in a mainframe and so on to various open systems. The reason is as mentioned above. The present invention provides a job network auto-generation apparatus, a method and a program recording medium to solve the above-mentioned problem.

### Measures for solving the problem

A job network auto-generation apparatus under the first aspect of the present invention includes a job network generation means which creates, from an inputted JCL file, a flow link describing a job-step control flow in a job and script files describing job-steps related to said flow link; and a job network output means which creates a job network definition file from said flow link and said script files.

A job network auto-generation program recorded in a recording medium under the second aspect of the present invention causes a computer execute job network generation processing where creates, from an inputted JCL file, a flow link describing a job-step control flow in a job and script files describing job-steps related to said flow link; and job network output processing which creates a job network definition file from said flow link and said script files.

In a job network auto-generating method under the first aspect of the present invention, a computer creates, from an inputted JCL file, a flow link describing a job-step control flow in a job and script files describing job-steps related to the flow link; and creates a job network definition file from said flow link and said script files.

### Effect of the invention

A job network auto-generation apparatus of the present invention can convert a JCL file which is described by a JCL language used for a mainframe and so to a job network definition file.

### Brief description of the drawings

[Fig. 1₋1] Fig. 1-1 is a first figure showing a job network flow representing an identical order relation.
[Fig. 1-2] Fig. 1-2 is a second figure showing a job network flow representing an identical order relation.
[Fig. 1-3] Fig. 1-3 is a third figure showing a job network flow representing an identical order relation.
[Fig. 1-4] Fig. 1-4 is a fourth figure showing a job network flow representing an identical order relation.
[Fig. 2] Fig. 2 is a diagram showing an entire structure of a job network auto-generation apparatus.
[Fig. 3] Fig. 3 is a block diagram of a JCL -> intermediate file conversion unit.
[Fig. 4] Fig. 4 is a block diagram of a job network generation unit.
[Fig. 5] Fig. 5 is a function explanatory diagram of a script file partition unit.
[Fig. 6] Fig. 6 is a function explanatory diagram of a flow link creation unit.
[Fig. 7] Fig. 7 is a first explanatory diagram of a flow link creation method.
[Fig. 8] Fig. 8 is a second explanatory diagram of a flow link creation method.
[Fig. 9] Fig. 9 is a third explanatory diagram of a flow link creation method.
[Fig. 10] Fig. 10 is a fourth explanatory diagram of a flow link creation method.
[Fig. 11] Fig. 11 is a fifth explanatory diagram of a flow link creation method.
[Fig. 12] Fig. 12 is a sixth explanatory diagram of a flow link creation method.
[Fig. 13] Fig. 13 is a flow chart illustrating processing by a JCL -> intermediate file conversion unit.
[Fig. 14] Fig. 14 is a first flow chart illustrating a flow link creation method.
[Fig. 15] Fig. 15 is a second flow chart illustrating a flow link creation method.
[Fig. 16] Fig. 16 is a third flow chart illustrating a flow link creation method.
[Fig. 17] Fig. 17 is a fourth flow chart illustrating a flow link creation method.
[Fig. 18] Fig. 18 is a flow chart illustrating output processing of a job network output unit.
[Fig. 19] Fig. 19 is a diagram showing a basic structure of a job network auto-generation apparatus 10 according to the present invention.

### Description of code

10 Job network auto-generation apparatus
11 JCL file input unit
12 JCL -> intermediate file conversion unit
13 Job network generation unit
14 Job network output unit
32 Intermediate file generation unit
34 Intermediate file output unit
36 Conversion dictionary
41 JCL analysis unit
42 Script file partition unit
43 Flow link creation unit
44 Flow link diagnosis unit
45 Flow link optimization unit
52 Trunk management unit
54 Branch management unit
56 Waiting management unit
58 Branch optimization unit

### Most Preferred embodiment for carrying out the invention

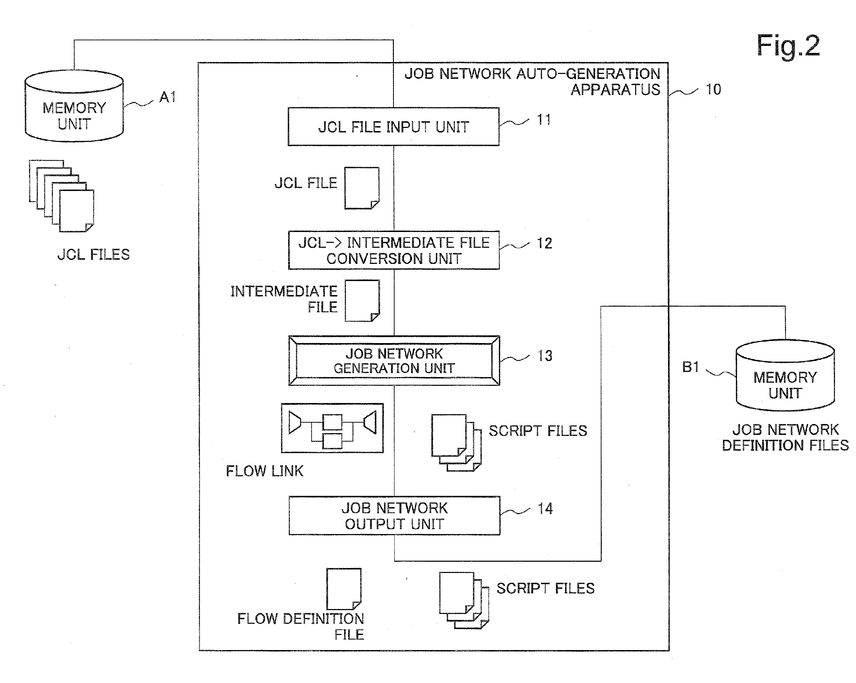

An exemplary embodiment, in the most preferred mode, of the present invention is described in detail with reference to the drawings. Fig. 2 indicates an entire structure of a job network auto-generation apparatus of the embodiment. A job network auto-generation apparatus 10 includes a JCL file input unit 11, a JCL -> intermediate file conversion unit 12, a job network generation unit 13 and a job network output unit 14. The JCL file input unit 11 reads a JCL file which is a conversion target from a memory unit A1. The JCL -> intermediate file conversion unit 12 analyzes a JCL file and converts the JCL file into an intermediate file described by a shell language which can be interpreted by a general-purpose UNIX (registered trademark) OS. The job network generation unit 13 analyzes a JCL description in an intermediate file and creates a flow link. The job network generation unit 13 further divides the intermediate file into job scripts. The job network output unit 14 converts the created flow link and job scripts into a job network definition file and outputs it.

The JCL file input unit 11, the JCL -> intermediate file conversion unit 12, the job network generation unit 13 and the job network output unit 14 are realized by hardware. The JCL file input unit 11, the JCL -> intermediate file conversion unit 12, the job network generation unit 13 and the job network output unit 14 may be realized by a processor of the job network auto-generation apparatus 10 which is also a computer executing a program on a memory.

The job network auto-generation apparatus 10 of Fig. 2 inputs a JCL file from a memory unit A1 and outputs a job network definition file to a memory unit B1.

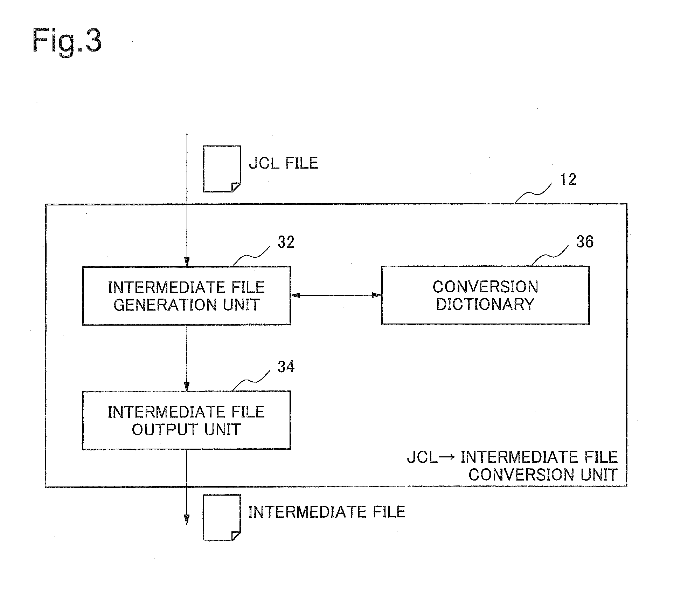

Fig. 3 is a block diagram of the JCL -> intermediate file conversion unit 12. The JCL -> intermediate file conversion unit 12 includes an intermediate file generation unit 32, an intermediate file output unit 34 and a conversion dictionary 36. The intermediate file generation unit 32 converts a JCL file extracted by the JCL file input unit 11 from a memory unit A1 into an intermediate file. The intermediate file output unit 34 outputs a generated intermediate file. The conversion dictionary 36 is prepared in advance. The intermediate file generation unit 32 performs conversion processing with reference to this conversion dictionary 36. A correspondence table of JCL and a shell script is stored in the conversion dictionary 36.

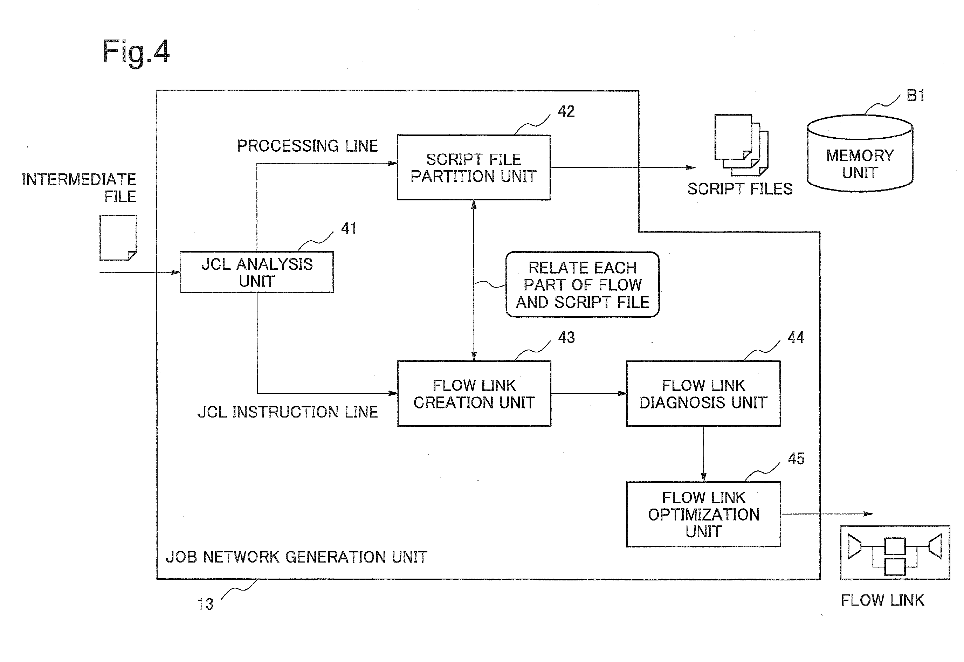

Fig. 4 is a block diagram of the job network generation unit 13. The job network generation unit 13 includes a JCL analysis unit 41, a script file partition unit 42, a flow link creation unit 43, a flow link diagnosis unit 44 and a flow link optimization unit 45. The JCL analysis unit 41 scans and analyzes a JCL description in an intermediate file. The script file partition unit 42 receives processing lines (lines which describe processing to be executed as a job) in a JCL description from the JCL analysis unit 41 and stores them in a script file of a memory unit B1. The flow link creation unit 43 receives a JCL instruction line (a flow control line) in a JCL description from the JCL analysis unit 41 and adds a flow part to a flow link in a main memory MEM1 according to the kind of the instruction line. The flow link diagnosis unit 44 diagnoses whether a flow link which the flow link creation unit 43 created has the correct structure. The flow link optimization unit 45 changes a structure of a flow link and optimizes the flow link.

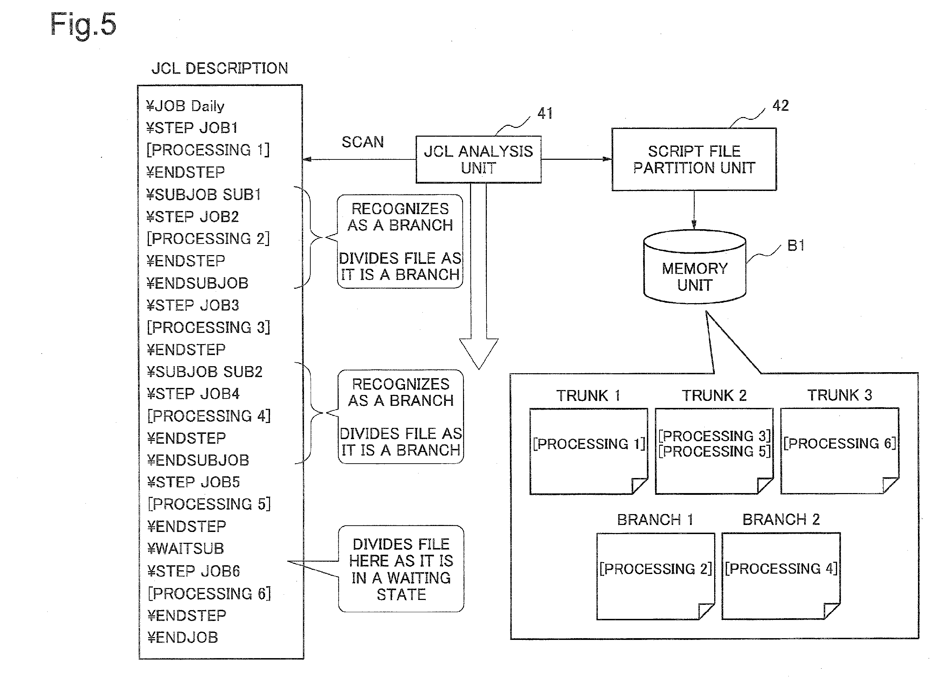

Fig. 5 is a function explanatory diagram of the script file partition unit 42. The JCL analysis unit 41 scans an inputted JCL description successively, and distinguishes whether a line scanned is a JCL instruction line or some other line (that is, a processing line). When the line is distinguished as a JCL instruction line, the JCL analysis unit 41 hands over the JCL instruction line to the flow link creation unit 43. On the other hand, when distinguished as a processing line, the JCL analysis unit 41 hands over the processing line to the script file partition unit 42.

The script file partition unit 42 divides processing lines and stores them into multiple script files created in a memory unit B1. Each script file is, when a JCL instruction line appears, opened (OPEN) or closed (CLOSE) by the flow link creation unit 43 as a script file to be related to either of a trunk or a branch.

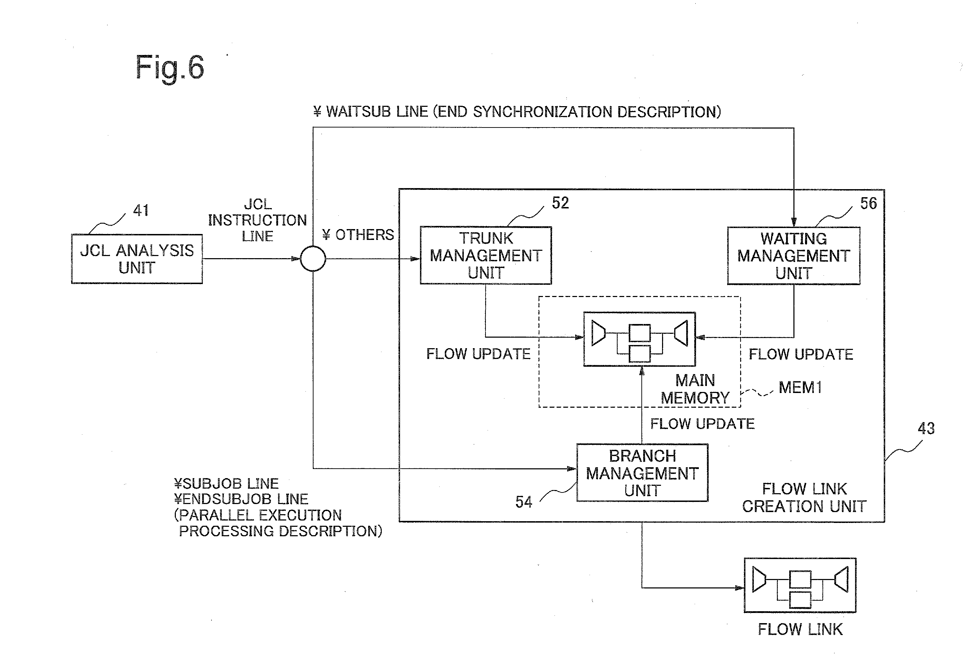

Fig. 6 is a function explanatory diagram of the flow link creation unit 43. The flow link creation unit 43 includes a trunk management unit 52, a branch management unit 54 and a waiting management unit 56, and creates a flow link using a main memory MEM1. The flow link creation unit 43 receives a JCL instruction line from the JCL analysis unit 41 and distributes a received JCL instruction line among the trunk management unit 52, the branch management unit 54 and the waiting management unit 56.

The flow link creation unit 43 interprets a flow of control described by a JCL description as follows.
1. Lines between ¥SUBJOB instruction and ¥ENDSUBJOB instruction constitute a "branch".
2. All JCL instruction lines other than above (¥JOB instruction, ¥ENDJOB instruction and so on) constitute "trunks".
3. ¥WAITSUB instruction is a waiting point (convergence point) of a "branch" derived by ¥SUBJOB.
4. JCL describes a flow of control in which no smaller than zero "branches" derive from a "trunk" which forms a basis, and they converge by waiting.

The flow link creation unit 43 creates a flow link using the following parts.
- Start (START) part
- End (END) part
- Unit job part
- Parallel branch part
- Event transmission part
- Event reception part

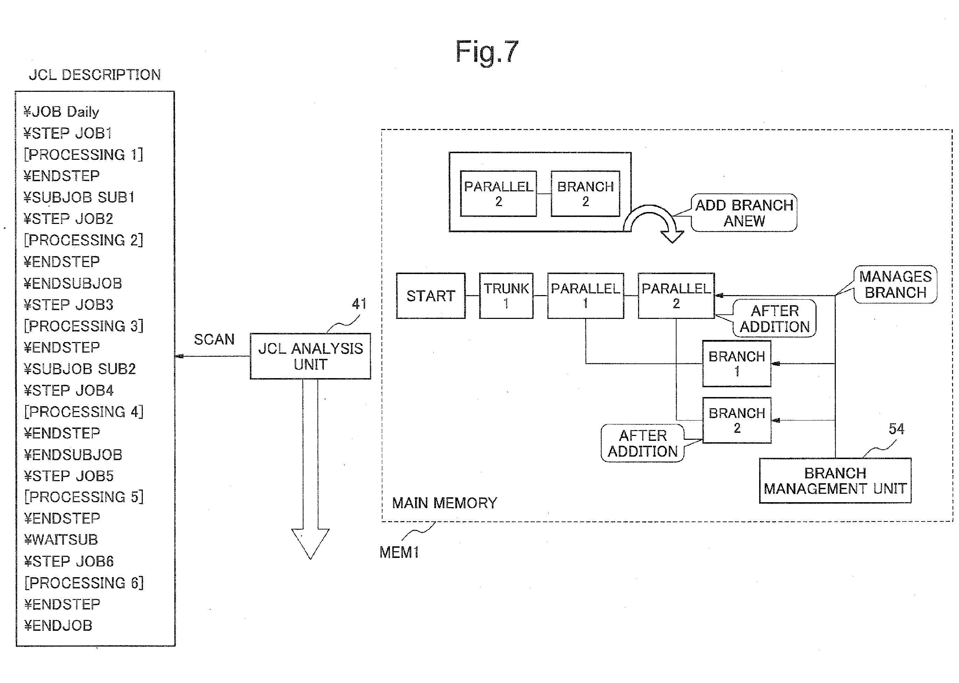

Figs. 7-12 are diagrams illustrating a flow link creation procedure executed by the flow link creation unit 43. First, the flow link creation unit 43 stores a start part in a flow link developed on a main memory MEM1. Next, the JCL analysis unit 41 sends ¥JOB Daily (¥STEP JOB1) of a JCL instruction line to the flow link creation unit 43, and the trunk management unit 52 updates the flow and adds Trunk 1 which is a unit job part. Then, the JCL analysis unit 41 sends ¥SUBJOB SUB1 (¥STEP JOB2) of a JCL instruction line to the flow link creation unit 43, and the branch management unit 54 updates the flow and adds Parallel 1 and Branch 1 which are parallel branch parts. When the JCL analysis unit 41 sends ¥JOB3 (¥STEP JOB3) of a JCL instruction line to the flow link creation unit 43, the trunk management unit 54 holds current Trunk 1 which is a unit job part and generates Trunk 2 as a new unit job part to be related to a waiting point.

Fig. 7 is an operation explanatory diagram when the flow link creation unit 43 has received ¥SUBJOB SUB2 (¥STEP JOB4) of a JCL instruction line. In Fig.'7, after receiving ¥SUBJOB SUB2, the branch management unit 54 adds Parallel 2 and Branch 2, which are parallel branch parts, to the flow link. Specifically, the branch management unit 54, which manages a branch, allocates Parallel 2 and Branch 2 in parallel to Parallel 1 and Branch 1, and adds them to the flow link. That is, in order to execute processing from ¥SUBJOB instruction to ¥ENDSUBJOB instruction which forms a branch in parallel, the branch management unit 54 adds parallel branch parts representing parallel execution to the flow link. At that moment, the branch management unit 54 creates a next branch in the branch path and further manages its convergence. Further, the branch management unit 54 relates a script file to a Branch n and stores all lines from ¥SUBJOB to ¥ENDSUBJOB relating to this Branch n.

The trunk management unit 52 manages a trunk portion. The trunk management unit 52 records all processing lines in a script file until ¥SUBJOB instruction or ¥WAITSUB instruction is detected. At that moment, the script file partition unit 42 records all those processing lines in a script file related to the trunk.

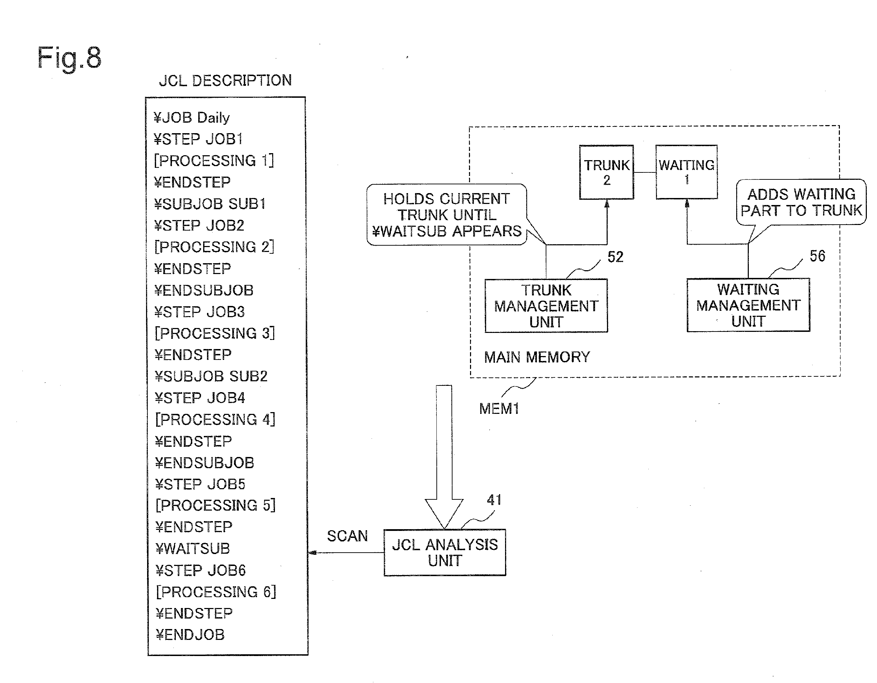

Fig. 8 is an operation explanatory diagram when the flow link creation unit 43 has received ¥WAITSUB of a JCL instruction line. The trunk management unit 52 has already generated Trunk 2 which relates to a waiting point at the stage before receiving ¥WAITSUB. As is illustrated, when the flow link creation unit 43 receives ¥WAITSUB, the waiting management unit 56 adds Waiting 1 which is a waiting part (also referred to as a focus (FOCUS) part) after the latest trunk which is Trunk 2. Also the trunk management unit 52 closes a script file related to Trunk 1 and opens a script file related to Trunk 2.

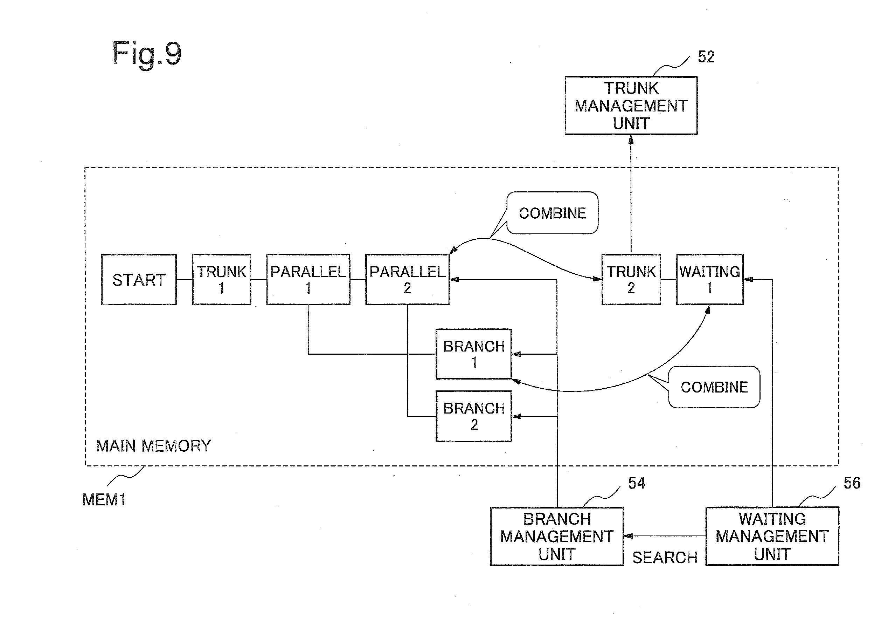

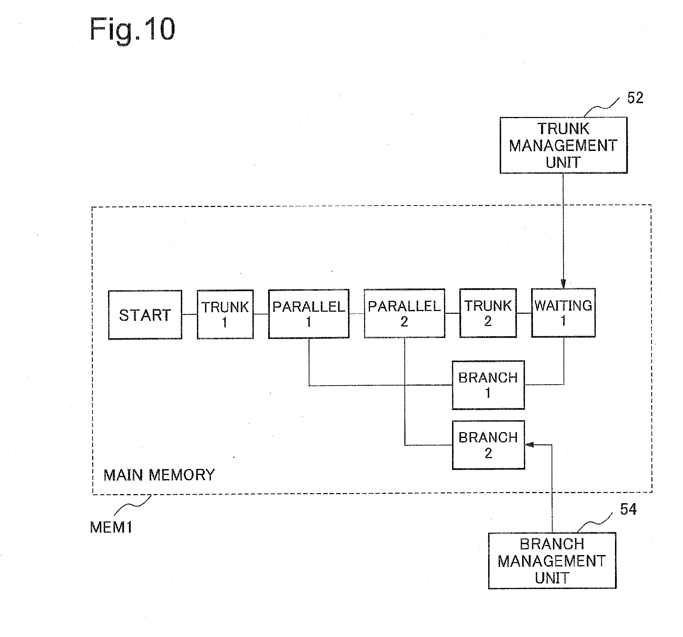

Figs. 9-11 are diagrams illustrating convergence method of branches. When Waiting 1 is added, the flow link creation unit 43 converges branches of the flow link. As shown in Fig. 9, the branch management unit 54 makes the waiting management unit 56 search for branches to be converged. Those branches are described in an argument of a ¥WAITSUB line. And first, the branch management unit 54 combines Branch 1 and Waiting 1. Also the trunk management unit 52 allocates Trunk 2 after Parallel 2 and combines them. As a result, the flow link is updated as shown in Fig. 10.

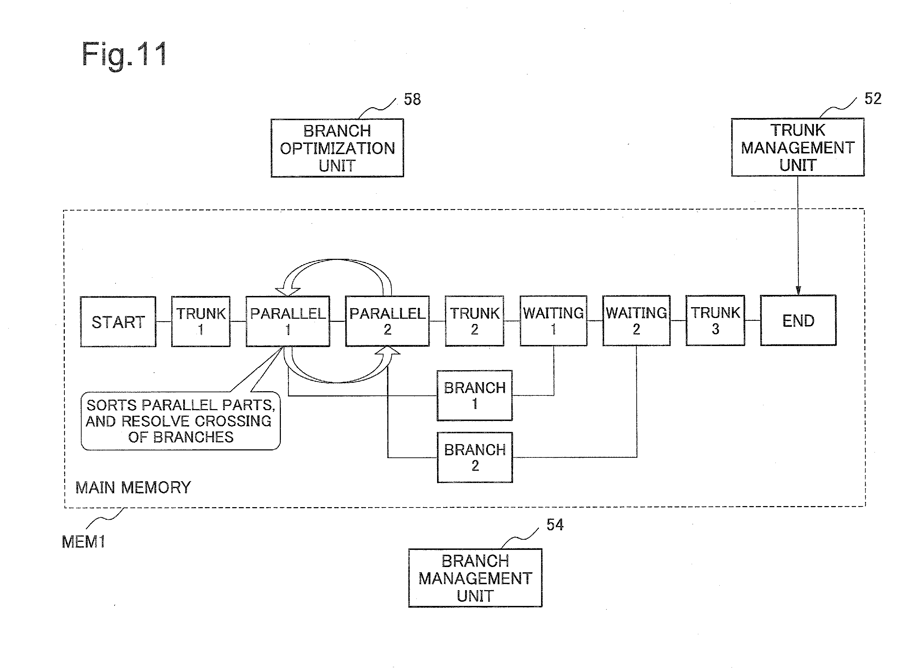

Next, the branch management unit 54 tries a convergence of Branch 2. The waiting management unit 56 generates Waiting 2 which is a waiting part and allocates this Waiting 2 after Waiting 1 and combines them. The branch management unit 54 combines Branch 2 and Waiting 2. In doing so, the processing of the read ¥WAITSUB ends. When the JCL analysis unit 41 scans the JCL description to the end, the flow link creation unit 43 combines Trunk 3, which is a unit job part, and an end part. As a result, the flow link is updated as shown in Fig. 11.

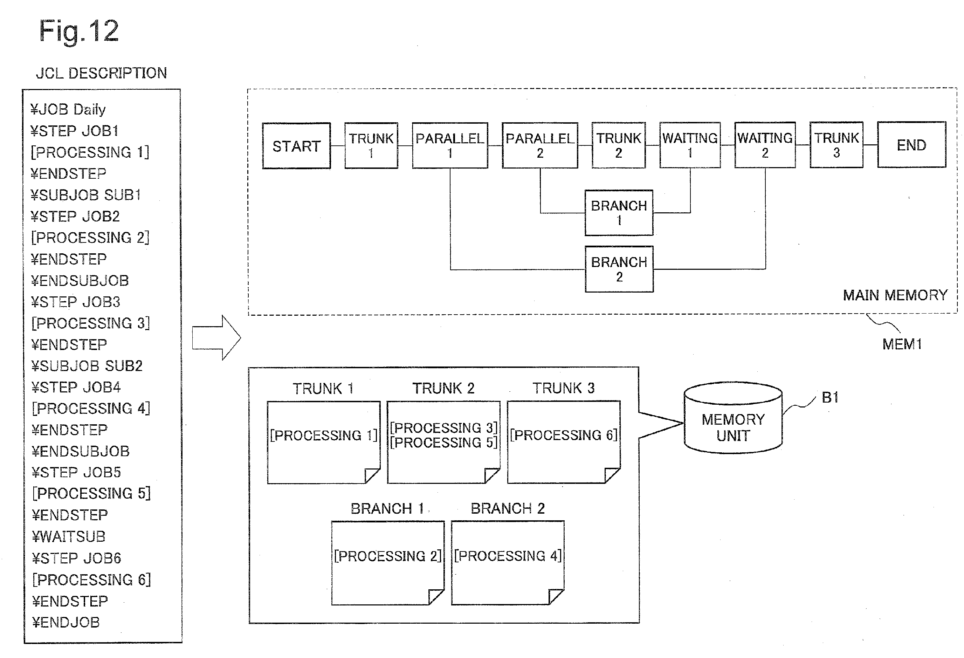

When scanning of a JCL description is completed, the flow link diagnosis unit 44 diagnoses branch parts using the branch management unit 54. When an un-converged branch exists, the flow link diagnosis unit 44 warns of the fact. Next, the flow link optimization 45 optimizes the flow link using the branch optimization unit 58 according to a flow method of job management software. As shown in Fig. 11, the branch optimization unit 58 sorts parallel branch parts and resolves crossing of branches. Fig. 12 is a diagram illustrating an input/output relation of the job network generation unit 13. The job network generation unit 13 inputs a JCL description of an intermediate file and outputs a flow link and a script files.

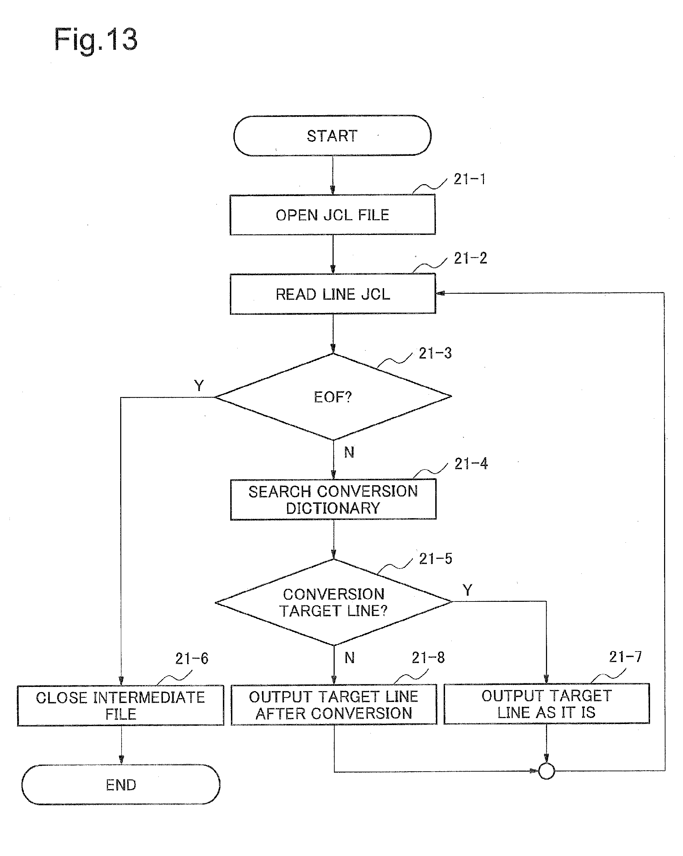

Fig. 13 is a flow chart illustrating processing of the JCL -> intermediate file conversion unit 12. The JCL -> intermediate file conversion unit 12 opens a JCL file (step 21-1), and reads a JCL description line by line (step 21-2). The intermediate file generation unit 32 repeats conversion processing, until EOF (End Of File) of a JCL file is detected (step 21-3). Until EOF of the JCL file is inputted (step 21-3: yes), the intermediate file generation unit 32 searches the conversion dictionary 36 (step 21-4), and examines whether the read line is a conversion target line (whether the line is in a conversion dictionary 36) or not (step 21-5). If the line is a conversion target line, the intermediate file generation unit 32 converts the line using a search result of the conversion dictionary 36 and outputs the result to an intermediate file (step 21-8). If the line is not a conversion target line, the intermediate file generation unit 32 outputs the line to the intermediate file as it is (step 21-7). When EOF of the JCL file is detected (step 21-3: yes), the intermediate file generation unit 32 closes the intermediate file (step 21-6). The intermediate file output unit 34 transmits the intermediate file created as a conversion result to the job network generation unit 13. By this conversion processing, a JCL file is converted into an intermediate file described in a shell language. The intermediate file generation unit 32 leaves as it is a JCL instruction line necessary for following conversion processing as a comment line.

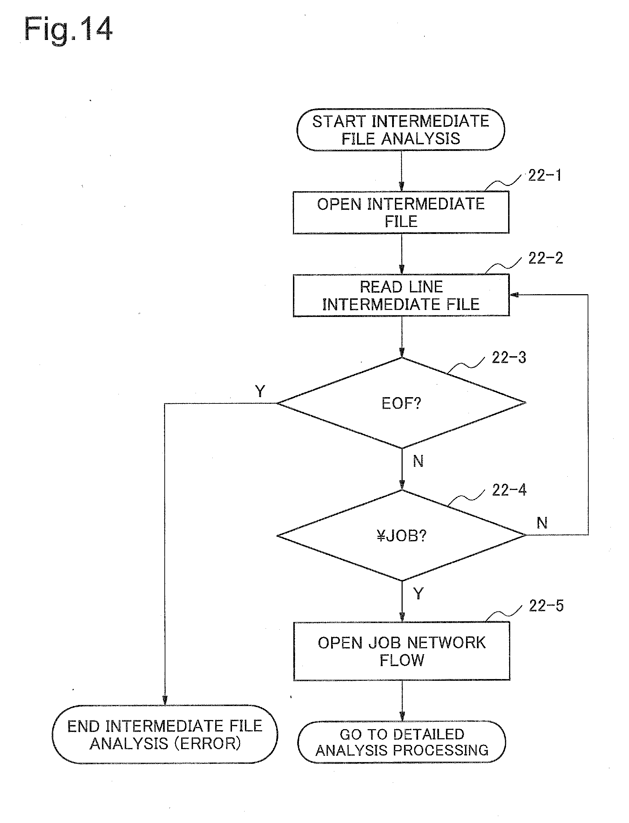

Figs. 14-17 are flow charts illustrating flow link creation processing of the job network generation unit 13. The job network generation unit 13 of this embodiment generates a flow link from the following JCL instruction lines.
¥ JOB (start of JCL description)
¥ ENDJOB (end of JCL description)
¥ SUBJOB (start of parallel execution processing description)
¥ ENDSUBJOB (end of parallel execution processing description)
¥ WAITSUB (end synchronization or end waiting corresponding designated ¥SUBJOB)
¥ RUN (start a job described by a designated JCL file)

As shown in Fig. 14, after opening an intermediate file received from the JCL -> intermediate file conversion unit 12 (step 22-1), the JCL analysis unit 41 in the job network generation unit 13 reads the intermediate file line by line (step 22-2). The JCL analysis unit 41 repeats reading of the intermediate file until EOF is detected (step 22-3). When EOF of the intermediate file is detected (step 22-3: yes), the JCL analysis unit 41 ends the analysis of the intermediate file as an error.

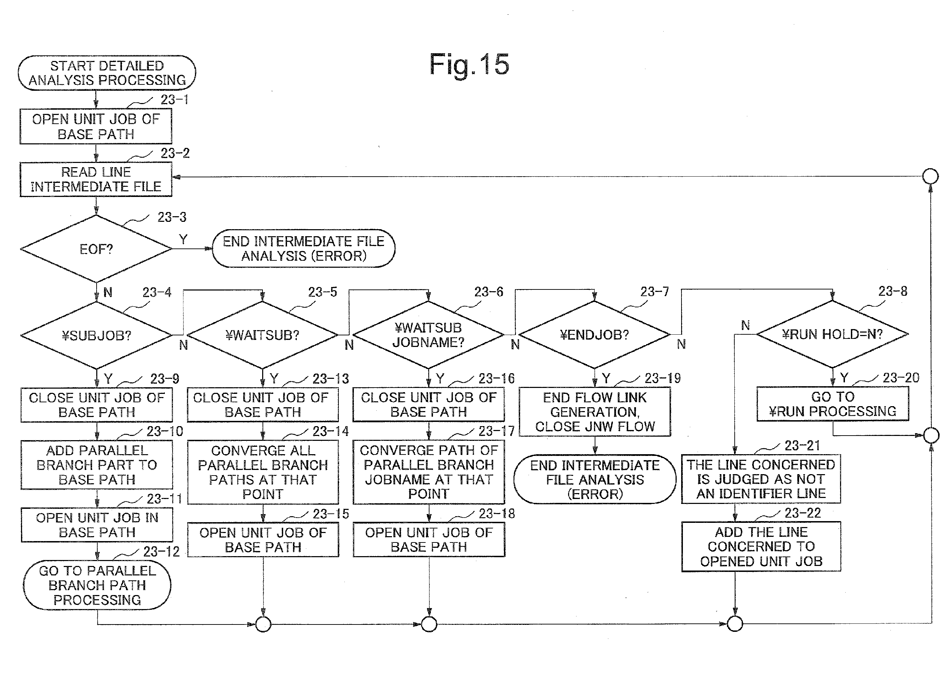

Until detecting EOF of the intermediate file (step 22-3: yes), the JCL analysis unit 41 distinguishes whether the read line is a JCL instruction line (a ¥JOB line) (step 22-4). If not a ¥JOB line (step 22-4: no), the JCL analysis unit 41 reads the next line. If it is a ¥JOB line (step 22-4: yes), the JCL analysis unit 41 opens a job network flow (step 22-5) and proceeds to detailed analysis processing of Fig. 15.

In detailed analysis processing of Fig. 15, first, as an initialization process, the flow link creation unit 43 adds a start part to a base (BASE) path and next, adds a unit job part and begins to create a flow link. The flow link creation unit 43 further creates in a memory unit B1 a script file related to the unit job part and opens it (step 23-1). If a read line is other than a JCL instruction line, the script file partition unit 42 stores the line in the opened script file.

The JCL analysis unit 41 reads an intermediate file line by line (step 23-2), and repeats this reading up to EOF (step 23-3). If the read line is a ¥SUBJOB line (step 23-4), the flow link creation unit 43 closes a unit job part of a base path (step 23-9) and adds a parallel branch part to the base path (step 23-10). The flow link creation unit 43 further creates a unit job part in a parallel branch path (step 23-11). The script file partition unit 42 stores all lines up to ¥ENDSUBJOB in the script file related to this unit job part. After that, the flow link creation unit 43 proceeds to parallel branch path processing (step 23-12).

When the read target line is a ¥WAITSUB line, and a JOBNAME argument does not exist (step 23-5), the flow link creation unit 43 closes the unit job part of the base path (step 23-13). Next, the flow link creation unit 43 adds a focus (FOCUS: waiting) part to the base path, searches for branches which are described in arguments of a ¥WAITSUB line and should be converged, and converges all parallel branch parts by this focus part (step 23-14). Then, the flow link creation unit 43 creates a next unit job part in the base path and opens the part (step 23-15).

If the read target line is a ¥WAITSUB line, and its argument is JOBNAME (step 23-6), the flow link creation unit 43 closes the unit job part of the base path (step 23-16). Next, the flow link creation unit 43 adds a focus part to the base path, searches for paths with JOBNAME described in arguments of a ¥WAITSUB line, and converges those parallel branch parts by this focus part (step 23-17). Then, the flow link creation unit 43 creates a next unit job part in the base path and opens the part (step 23-18).

If the read target line is a ¥ENDJOB line (step 23-7), the flow link creation unit 43 ends a creation of the flow link and closes the job network flow (step 23-19).

If the read target line is a ¥RUN line, and its parameter value is HOLD=N (step 23-8), the flow link creation unit 43 proceeds to ¥RUN processing (step 23-20). The parameter value of HOLD=N means to execute the JOBNAME (¥RUN) after the JOBNAME designated in an argument is activated N times (¥ACTIVATE).

If the read target line is neither a ¥SUBJOB line, nor a ¥WAITSUB line, nor a ¥ENDJOB line, nor a ¥RUN line whose parameter value is HOLD=N, the flow link creation unit 43 judges that the read line is not an identifier line (step 23-21). The script file partition unit 42 adds this line to the script file which is related to the unit job part currently opened (step 23-22).

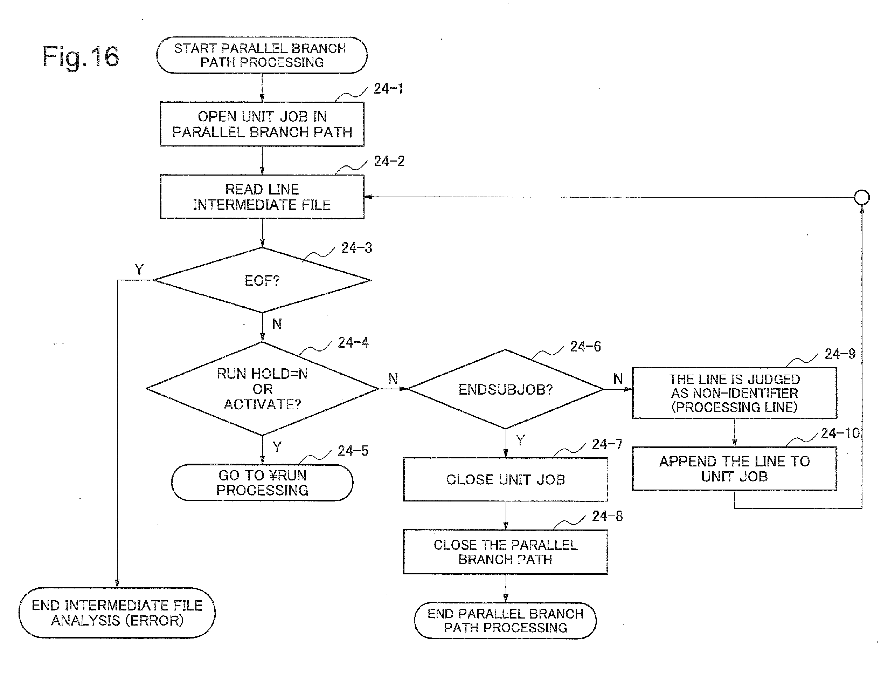

Fig. 16 is a flow chart illustrating parallel branch path processing. First, the flow link creation unit 43 opens a unit job part in a parallel branch path (step 24-1). Next, the JCL analysis unit 41 reads an intermediate file line by line (step 24-2), and repeats this reading until EOF is detected (step 24-3). The flow link creation unit 43 determines whether the read line is either of "¥RUN HOLD=ON" or "¥ACTIVATE" (step 24-4). If either of them, the flow link creation unit 43 proceeds to ¥RUN processing (step 24-5). If neither of them, the flow link creation unit 43 determines whether the read line is "¥ENDSUBJOB" or not (step 24-6). If the read line is "¥ENDSUBJOB", the flow link creation unit 43 closes the unit job part (step 24-7), closes the parallel branch path (step 24-8) and ends parallel branch path processing. If the read line is not "¥ENDSUBJOB", the flow link creation unit 43 assumes that the line is a processing line (step 24-9), and appends the line to the script file related to the unit job part (step 24-10).

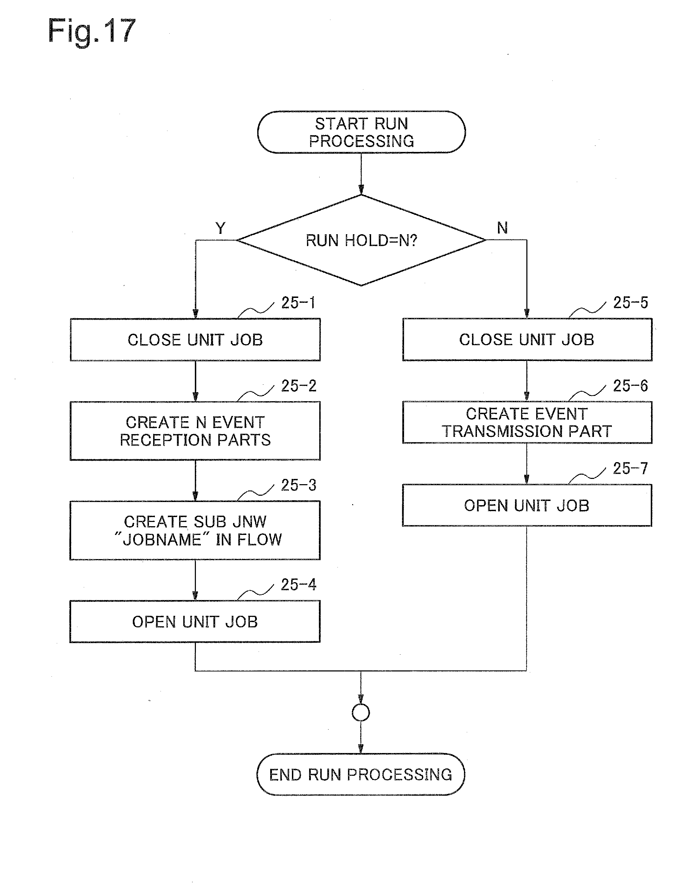

Fig. 17 is a flow chart illustrating RUN processing. In Fig. 17, if the line is "¥RUN HOLD=ON", the flow link creation unit 43 closes the unit job part (step 25-1), and creates N event reception parts (step 25-2). Next, the flow link creation unit 43 creates a sub job network "JOBNAME" in a flow link (step 25-3) and opens a next unit job (step 25-4). On the other hand, if the line is not "¥RUN HOLD=ON", the flow link creation unit 43 closes the unit job part (step 25-5) and creates an event transmission part (step 25-6). Next, the flow link creation unit 43 opens a next unit job part (step 25-7).

When scanning of JCL descriptions are completed, the waiting management unit 56 scans branch (BRANCH) parts, and if an un-converged branch part exists, warns the facts. Next, the flow link optimization unit 45 sorts branch parts according to an index (index) of focus parts.

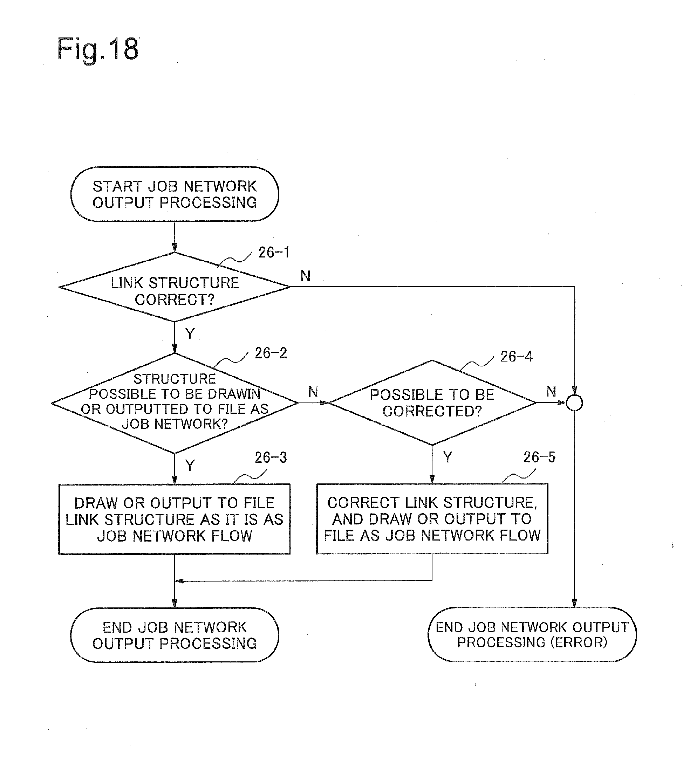

Fig. 18 is a flow chart illustrating output processing of the job network output unit 14. The job network output unit 14 converts, following the flow chart of Fig. 18, a flow link and so on into a job network definition for the target job management software. In Fig. 18, first, the job network output unit 14 determines whether a link structure of a flow link is correct or not (step 26-1). If it is not correct, the job network output unit 14 outputs an error. If it is correct, the job network output unit 14 determines whether it has a structure that can be drawn as a job network or a structure that can be outputted to a file (step 26-2). If it has such a structure, the job network output unit 14 draws a link structure as a job network flow just as it is or outputs it to a file (step 26-3). If it does not have such a structure, the job network output unit 14 determines whether it is possible to be corrected or not (step 26-4), and if possible to be corrected, corrects the link structure and draws it as a job network flow or outputs it to a file ((step 26-5).

Job management software of an open system inputs a job network definition which the job network auto-generation apparatus 10 generates. Job management software interprets a job network definition, starts scripts, which are generated by the job network auto-generation apparatus 10, according to a control flow of parallel executions and convergences (synchronizations) expressed by a flow link, and takes an end synchronization of the scripts which are started. By the operation of this job management software, a job on a mainframe computer described in JCL can be executed on an open system.

As has been described above, the job network auto-generation apparatus 10 of this embodiment has the following effects. The first effect is that the cost of a job environment transition from a mainframe computer to an open system is reduced substantially. That is because the job network auto-generation apparatus 10 of this embodiment enables automatic conversion from JCL to a job network, and man-power and risks for a manual job migration become minimal.

The second effect is that the maintainability after a job environment transition is improved very much. That is because a job network flow generated by the job network auto-generation apparatus 10 automatically is a simple flow with high maintainability. Accordingly, job monitoring and modification work after a transition become very easy compared with a case of a JCL file.

The third effect is that job operations using general job management software can be performed easily. That is because the algorithm which the job network auto-generation apparatus 10 utilizes to convert a complicated flow into a flow with a simple shape can be applied to flow optimization of general job management software. This is because a flow of job management software can be converted into a flow with high maintainability.

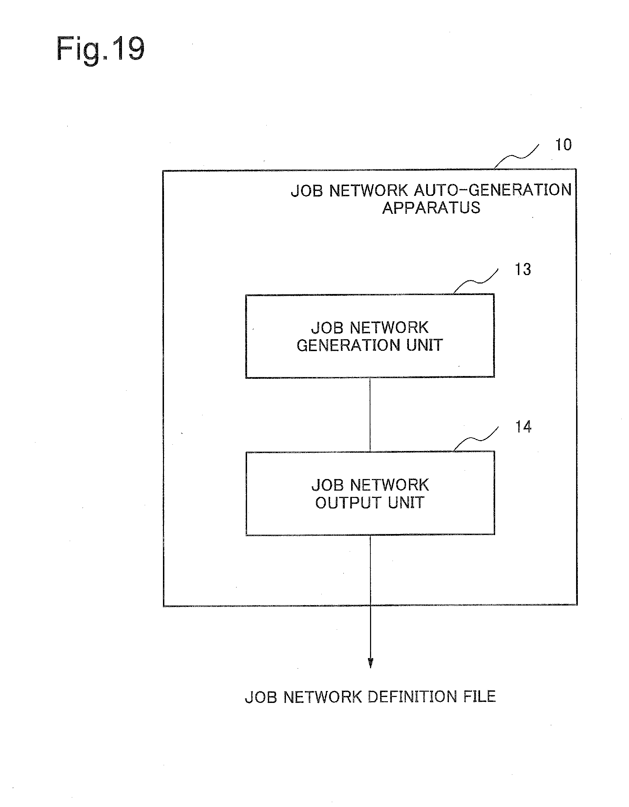

Fig. 19 is a diagram showing a basic structure of the job network auto-generation apparatus 10 of the present invention. The job network auto-generation apparatus 10 includes a job network generation unit 13 and a job network output unit 14.

The job network generation unit 13 creates a flow link which describes job-step control flow in a job from an inputted JCL file and script files which are related to the flow link and each of them describes each job-step. The job network output unit 14 creates a job network definition file from the flow link and the script files.

In this basic structure, an intermediate file is not created by the JCL -> intermediate file creation unit 12. It is supposed that an intermediate file is created, for example, by another apparatus, and is stored in a memory unit A1 in advance.

As mentioned above, the present invention has been described with reference to an exemplary embodiment. However, the present invention is not limited to the above-mentioned exemplary embodiments. Various changes can be made in the composition and details of the present invention within the scope of the present invention and to the extent a person skilled in the art can understand.

This application claims priority based on Japanese application Japanese Patent Application No. 2008-058805 filed on March 7th, 2008 and the disclosure thereof is incorporated herein in its entirety.

## Claims

1. A job network auto-generation apparatus comprising:
a job network generation means which creates, from an inputted JCL (Job Control Language) file, a flow link describing a job-step control flow in a job and script files describing job-steps related to said flow link; and
a job network output means which creates a job network definition file from said flow link and said script files.

2. The job network auto-generation apparatus of claim 1 wherein said job network creation means generates said script files from processing lines of said JCL file and generates said flow link from JCL instruction lines of said JCL file.

3. The job network auto-generation apparatus of claim 2 wherein said job network generation unit inputs said JCL instruction lines including a parallel execution processing description and an end synchronization description,
derives from a sequential execution flow (trunk) of said job described in said flow link, when said parallel execution processing description is inputted, a flow (branch) which is executed in parallel to said trunk,
converges said branch to said trunk in said flow link when said end synchronization description is inputted,
generates said script files, each of which is corresponding to each divided portion of the flow having said parallel execution processing description and said end synchronization description as a boundary, and relates each said script file to each of said trunk and said branch.

4. The job network auto-generation apparatus of claim 3 comprising:
a conversion dictionary,
a JCL -> intermediate file conversion unit which converts inputted said JCL file into an intermediate file using said conversion dictionary, wherein
said job network creation means creates said flow link from said intermediate file.

5. The job network auto-generation apparatus of claim 4 wherein said job network generation unit, corresponding to said parallel execution processing description, creates a parallel part in said flow link, and corresponding to said end synchronization description, creates a waiting part in said flow link.

6. A recording medium recording a job network auto-generation program causing; a computer
executes job network generation processing where creates, from an inputted JCL (Job Control Language) file, a flow link describing a job-step control flow in a job and script files describing job-steps related to said flow link; and
job network output processing where creates a job network definition file from said flow link and said script files.

7. The recording medium recording said job network auto-generation program of claim 6, wherein; said computer
executes said job network creation processing where generates said script files from processing lines of said JCL file and generates said flow link from JCL instruction lines of said JCL file.

8. The recording medium recording said job network auto-generation program of claim 7, wherein; said computer
executes said job network generation processing where inputs said JCL instruction lines including a parallel execution processing description and an end synchronization description,
derives from a sequential execution flow (trunk) of said job described in said flow link, when said parallel execution processing description is inputted, a flow (branch) which is executed in parallel to said trunk,
converges said branch to said trunk in said flow link when said end synchronization description is inputted,
generates said script files, each of which is corresponding to each divided portion of the flow having said parallel execution processing description and said end synchronization description as a boundary, and relates each said script file to each of said trunk and said branch.

9. The recording medium recording said job network auto-generation program of claim 8, wherein; said computer comprising a conversion dictionary
executes JCL -> intermediate file conversion processing where converts inputted said JCL file into an intermediate file using said conversion dictionary, and
said job network creation processing where creates said flow link from said intermediate file.

10. The recording medium recording said job network auto-generation program of claim 9, wherein; said computer
executes said job network generation processing where, corresponding to said parallel execution processing description, creates a parallel part in said flow link, and corresponding to said end synchronization description, creates a waiting part in said flow link.

11. A job network auto-generation method wherein; a computer creates, from an inputted JCL (Job Control Language) file, a flow link describing a job-step control flow in a job and script files describing job-steps related to said flow link; and
creates a job network definition file from said flow link and said script files.

12. The job network auto-generation method of claim 11 wherein; said computer
generates said script files from processing lines of said JCL file and generates said flow link from JCL instruction lines of said JCL file.

13. The job network auto-generation method of claim 12 wherein; said computer
inputs said JCL instruction lines including a parallel execution processing description and an end synchronization description,
derives from a sequential execution flow (trunk) of said job in said flow link, when said parallel execution processing description is inputted, a flow (branch) which is executed in parallel to said trunk,
converges said branch to said trunk in said flow link when said end synchronization description is inputted,
generates said script files each of which is corresponding to each divided portion of the flow having said parallel execution processing description and said end synchronization description as a boundary, and relates each said script file to each of said trunk and said branch.

14. The job network auto-generation method of claim 13 wherein; said computer comprising a conversion dictionary
converts inputted said JCL file into an intermediate file using said conversion dictionary, and
creates said flow link from said intermediate file.

15. The job network auto-generation method of claim 14 wherein; said computer
corresponding to said parallel execution processing description, creates a parallel part in said flow link, and corresponding to said end synchronization description, creates a waiting part in said flow link.

## Amended claims

### Amended claims under Art. 19.1 PCT

1. A job network auto-generation apparatus comprising:
a job network generation means which creates, from an inputted JCL (Job Control Language) file, a flow link describing a job-step control flow in a job and script files describing job-steps related to said flow link; and
a job network output means which creates a job network definition file from said flow link and said script files.

2. (amended) The job network auto-generation apparatus of claim 1 wherein said job network generation means generates said script files from processing lines of said JCL file and generates said flow link from JCL instruction lines of said JCL file.

3. (amended) The job network auto-generation apparatus of claim 2 whrerin said job network generation means inputs said JCL instruction lines including a parallel execution processing description and an end synchronization description,
derives from a sequential execution flow (trunk) of said job described in said flow link, when said parallel execution processing description is inputted, a flow (branch) which is executed in parallel to said trunk,
converges said branch to said trunk in said flow link when said end synchronization description is inputted,
generates said script files, each of which is corresponding to each divided portion of the flow having said parallel execution processing description and said end synchronization description as a boundary, and relates each said script file to each of said trunk and said branch.

4. (amended) The job network auto-generation apparatus of claim 3 comprising:
a conversion dictionary,
a JCL -> intermediate file conversion unit which converts inputted said JCL file into an intermediate file using said conversion dictionary, wherein
said job network generation means creates said flow link from said intermediate file.

5. (amended) The job network auto-generation apparatus of claim 4 wherein said job network generation means, corresponding to said parallel execution processing description, creates a parallel part in said flow link, and corresponding to said end synchronization description, creates a waiting part in said flow link.

6. A recording medium recording a job network auto-generation program causing; a computer
executes job network generation processing where creates, from an inputted JCL (Job Control Language) file, a flow link describing a job-step control flow in a job and script files describing job-steps related to said flow link; and
job network output processing where creates a job network definition file from said flow link and said script files.

7. (amended) The recording medium recording said job network auto-generation program of claim 6, wherein; said computer
executes said job network generation processing where generates said script files from processing lines of said JCL file and generates said flow link from JCL instruction lines of said JCL file.

8. The recording medium recording said job network auto-generation program of claim 7, wherein; said computer
executes said job network generation processing where inputs said JCL instruction lines including a parallel execution processing description and an end synchronization description,
derives from a sequential execution flow (trunk) of said job described in said flow link, when said parallel execution processing description is inputted, a flow (branch) which is executed in parallel to said trunk,
converges said branch to said trunk in said flow link when said end synchronization description is inputted,
generates said script files, each of which is corresponding to each divided portion of the flow having said parallel execution processing description and said end synchronization description as a boundary, and relates each said script file to each of said trunk and said branch.

9. (amended) The recording medium recording said job network auto-generation program of claim 8, wherein; said computer comprising a conversion dictionary
executes JCL -> intermediate file conversion processing where converts inputted said JCL file into an intermediate file using said conversion dictionary, and
said job network generation processing where creates said flow link from said intermediate file.

10. The recording medium recording said job network auto-generation program of claim 9, wherein; said computer
executes said job network generation processing where, corresponding to said parallel execution processing description, creates a parallel part in said flow link, and corresponding to said end synchronization description, creates a waiting part in said flow link.

11. A job network auto-generation method wherein; a computer creates, from an inputted JCL (Job Control Language) file, a flow link describing a job-step control flow in a job and script files describing job-steps related to said flow link; and
creates a job network definition file from said flow link and said script files.

12. The job network auto-generation method of claim 11 wherein; said computer
generates said script files from processing lines of said JCL file and generates said flow link from JCL instruction lines of said JCL file.

13. The job network auto-generation method of claim 12 wherein; said computer
inputs said JCL instruction lines including a parallel execution processing description and an end synchronization description,
derives from a sequential execution flow (trunk) of said job in said flow link, when said parallel execution processing description is inputted, a flow (branch) which is executed in parallel to said trunk,
converges said branch to said trunk in said flow link when said end synchronization description is inputted,
generates said script files each of which is corresponding to each divided portion of the flow having said parallel execution processing description and said end synchronization description as a boundary, and relates each said script file to each of said trunk and said branch.

14. The job network auto-generation method of claim 13 wherein; said computer comprising a conversion dictionary
converts inputted said JCL file into an intermediate file using said conversion dictionary, and
creates said flow link from said intermediate file.

15. The job network auto-generation method of claim 14 wherein; said computer
corresponding to said parallel execution processing description, creates a parallel part in said flow link, and corresponding to said end synchronization description, creates a waiting part in said flow link.

Statement under Art. 19.1 PCT
Concerning claims 2, 3, 4, 5, 7 and 9, errors in writing pointed out by the written opinion of the International Searching Authority are corrected.
